# EUROPÄISCHE PATENTANMELDUNG

(11) **EP 0 979 989 A1**
(43) Veröffentlichungstag der Anmeldung: **16.02.2000**
(21) Anmeldenummer: 99109908.6
(22) Anmeldetag: 20.05.1999
(51) Int. Cl.: G01F 23/74, G01F 23/76

(54) **Behälter mit Füllstandsanzeige**

(30) Priorität: 13.08.1998 DE 19836597
(71) Anmelder: Mannesmann VDO Aktiengesellschaft, 60388 Frankfurt am Main (DE)
(72) Erfinder: Petzold, Sven, 65191 Wiesbaden (DE); Kober, Rainer, 64297 Darmstadt (DE)
(74) Vertreter: Klein, Thomas, Dipl.-Ing.

(57) **Zusammenfassung**

Bei bekannten Füllstandsanzeigen gestaltet sich die Montage oft sehr aufwendig oder sie benötigen eine zusätzliche Montageöffnung im Flüssigkeitsbehälters. Der neue Flüssigkeitsbehälters soll eine Füllstandsanzeige beinhalten, die möglichst klein baut und gut zu montieren ist, ohne jedoch zusätzliche Montageöftnungen oder Mittel zur Halterung zu benötigen.
Der Flüssigkeitsbehälters besitzt eine von der Behälterwandung gebildete, vertikal verlaufende Einstülpung. In dieser Einstülpung sind magnetisch betätigbare Schalter einer Füllstandsanzeige angeordnet. Ein als Schwimmer ausgebildeter Magnet umgibt die Einstülpung so, daß er gleichzeitig von der Einstülpung in vertikaler Richtung geführt wird.
Derartige Flüssigkeitsbehälters eignen sich für den Einsatz als Waschflüssigkeits- und Kraftstoffbehälter in einem Kraftfahrzeug.

## Beschreibung

Gegenstand der Erfindung ist ein Behälter mit integrierter Füllstandsanzeige, insbesondere für eine Scheibenreinigungsanlage in einem Kraftfahrzeug.

Es ist allgemein bekannt, in Vorratsbehältern von Scheibenreinigungsanlagen Füllstandsgrenzanzeigen anzuordnen, die dem Fahrer eine Information über den Füllstand geben, wenn dieser ein bestimmtes Niveau unterschreitet.

Es sind weiterhin Füllstandsanzeiger mit Reedschaltern bekannt. Die magnetisch betätigten Schalter befinden sich in einem Rohr, um das ein als Schwimmer ausgebildeter Magnet angeordnet ist. Die Anordnung der Reedschalter in dem Rohr ist notwendig, da man aus verschiedenen Gründen einen Kontakt der Schalter mit dem Fluid im Behälter vermeiden will.

Der Nachteil dieser Füllstandsanzeiger besteht darin, daß sich die Montage beim Einbringen des Füllstandsanzeigers durch die Einfüllöffnung im Innern des Behälters oft als sehr schwierig erweist. Eine verbesserte Montage ist möglich, wenn der Behälter eine zweite Öffnung besitzt. Eine zusätzliche Öffnung ist jedoch immer mit erhöhtem Aufwand und höheren Kosten verbunden. Desweiteren sind Haltemittel notwendig, die den Füllstandsanzeiger im Inneren des Behälters fixieren.

Der Erfindung liegt die Aufgabe zugrunde, einen Behälter mit einer Füllstandsanzeige zu schaffen, die möglichst klein gebaut und gut zu montieren ist, ohne jedoch zusätzliche Montageöffnungen oder Mittel zur Halterung zu benötigen.

Die Aufgabe wird mit dem Merkmal des Anspruchs 1 gelöst. Vorteilhafte Ausgestaltungen sind in den Ansprüchen 2 bis 10 beschrieben.

Das der Erfindung zugrunde liegende Problem wird durch eine am Behälter integrierte Füllstandsanzeige mit Reed-Schaltern gelöst. Der Behälter ist dabei so ausgestaltet, daß er in einem Bereich eine durch seine Behälterwandung gebildete Einstülpung aufweist, in die von außen die Reed-Schalter einsetzbar sind. Die Einstülpung ist so gestaltet, daß ein als Schwimmer ausgebildeter Magnet im Innern des Behälters zu der Einstülpung anordenbar ist und in Abhängigkeit vom Füllstand die einzelnen Reed-Schalter betätigt.

Die Vorteile der Erfindung bestehen darin, daß der Aufbau des Füllstandsanzeigers sich vereinfacht, da kein die Reed-Schalter vom Fluid trennendes Bauelement mehr notwendig ist und nur noch der Magnet des Füllstandsanzeigers im Inneren des Behälters angeordnet ist. Dadurch wird die Montage wesentlich vereinfacht. Separate Montageöffnungen entfallen ebenso wie Haltemittel für den Füllstandsanzeiger, da die Einstülpung in der Behälterwandung bereits ein Teil des Füllstandsanzeigers ist. Aufgrund der hohen Eigenstabilität der Behälterwandung entfallen ebenso die Mittel zum Fixieren des Füllstandsanzeigers am Boden des Behälters, die bisher eine Bewegung des Füllstandsanzeigers verhindert haben. Durch die erfindungsgemäße Anordnung der Reed-Schalter lassen sich deren Wartung und gegebenenfalls Reparatur durchführen, ohne den Behälter öffnen zu müssen. Diese in den Behälter integrierte Füllstandsanzeige ist sowohl in geblasenen Behältern als auch in Spritzbehältern realisierbar, wobei diese Behälter Waschflüssigkeitsbehälter, Kraftstoffbehälter oder alle anderen Behälter, die einen Fluid enthalten, sein können.

In einer vorteilhaften Ausgestaltung des Behälters erstreckt sich die Einstülpung von einer den Behälter nach oben begrenzenden Behälterwandung in Richtung des Behälterbodens. Es ist jedoch auch möglich, die Einstülpung derart anzuordnen, daß sie sich vom Boden beginnend nach oben erstreckt. In diesen Ausgestaltungen ist der Magnet ringförmig und umschließt die Einstülpung.

In einer weiteren Ausführungsform ist die Einstülpung an einem vertikalen Bereich der Behälterwandung derart angeordnet, daß sie in ihrer Längserstrekkung parallel zu dem vertikalen Bereich verläuft. Magnet und Einstülpung sind dabei so ausgebildet, daß der Magnet von der Einstülpung in vertikaler Richtung geführt wird. In horizontaler Richtung besitzt der Magnet lediglich ein minimales Spiel, um ein Klemmen zu vermeiden.

Die Montage der Füllstandsanzeiger erfolgt derart, daß die Reedschalter von außen in die Einstülpung eingesetzt werden und von innen der Schwimmer zu der Einstülpung montiert wird. Ein Fixiermittel, das schon in der Einstülpung ausgebildet ist oder als zusätzliches Element an der Einstülpung befestigt wird, verhindert, daß der Schwimmer sich von der Einstülpung löst.

In einer anderen Ausgestaltung wird das Lösen dadurch vermieden, daß die Einstülpung so weit bis zur gegenüberliegenden Behälterwandung ausgebildet ist, daß der Schwimmer die gegenüberliegende Wandung berührt, jedoch um die Einstülpung angeordnet bleibt.

In einer weiteren vorteilhaften Ausgestaltung gestaltet sich die Montage des Magneten besonders einfach, wenn der Behälter nach dem Spritzverfahren hergestellt ist. Dabei werden zuerst die beiden Behälterhälften gespritzt, dann wird der Magnet zu der Einstülpung angeordnet und anschließend werden die Behälterhälften miteinander gefügt.

Zum Schutz der Reedschalter mit der zugehörigen Auswerteelektronik vor dem Verschmutzen oder vor Feuchtigkeit ist es vorteilhaft, die Einstülpung von außen nach dem Einsetzen der Reedschalter zu verschließen. Der Verschluß kann eine mit Rastelementen versehene Kappe, ein Schraubverschluß, ein durch Einpressen verschließender Deckel oder andere bekannte Mittel sein.

Vorteilhafterweise verfügt der Verschluß über ein Steckergehäuse, mit dem die Meßleitungen der Auswerteelektronik kontaktiert sind.

Besonders vorteilhaft ist dabei, wenn der Verschluß mit einem Filmscharnier, einer Lasche oder ähnlichen Halteelementen am Behälter befestigt ist.

Anhand von drei Ausführungsbeispielen wird die Erfindung nachfolgend beschrieben.

Dabei zeigen:
- Fig. 1:: Einen Waschflüssigkeitsbehälter mit oben angeordnetem Füllstandsanzeiger,
- Fig. 2:: einen Waschflüssigkeitsbehälter mit unten angeordneten Füllstandsanzeiger,
- Fig. 3:: einen Waschflüssigkeitsbehälter mit seitlich angeordnetem Füllstandsanzeiger,
- Fig. 4:: eine Draufsicht auf einen Waschflüssigkeitsbehälter.

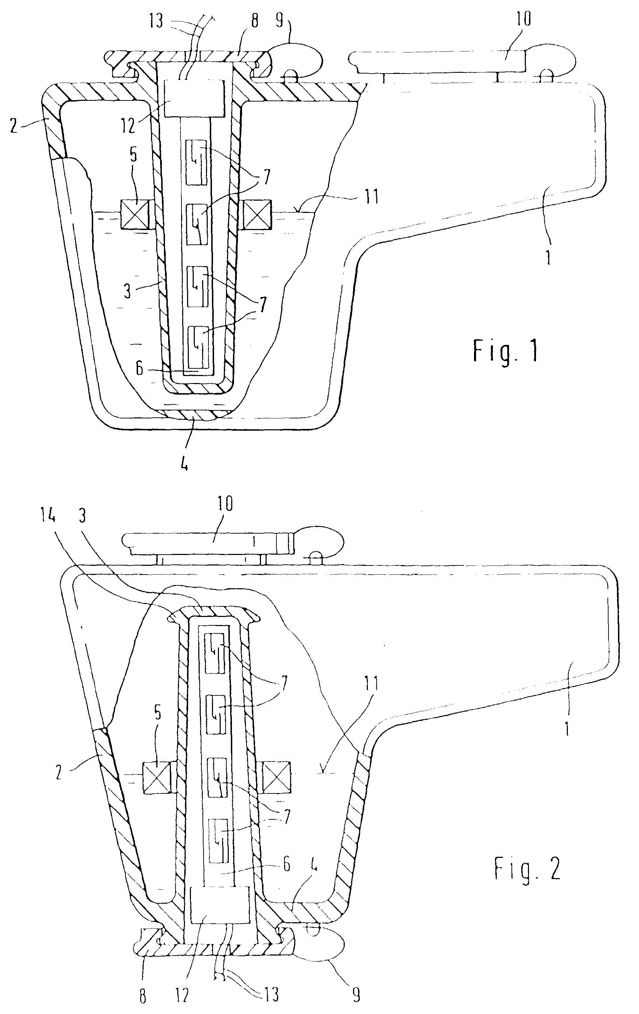

In Figur 1 ist ein Behälter 1 für Waschflüssigkeit dargestellt. Die Behälterwandung 2 ist im oberen Bereich des Behälters 1 derart ausgebildet, daß beginnend von der den Behälter 1 nach oben begrenzenden Behälterwandung 2 eine Einstülpung 3 bis unmittelbar zum Boden 4 angeordnet ist. Um die Einstülpung 3 ist ein in vertikaler Richtung frei beweglicher, als Schwimmer ausgebildeter, ringförmiger Magnet 5 angeordnet. In der Einstülpung 3 sind auf einem Träger 6 mehrere Reed-Schalter 7 angeordnet. Ein Verschluß 8 verschließt die von der Behälterwandung 2 gebildete Einstülpung 3. Über eine an der Behälterwandung 2 befestigte Lasche 9 ist der Verschluß 8 mit dem Behälter 1 verbunden. Des weiteren besitzt der Behälter 1 eine Nachfüllöffnung 10. Der Magnet 5 bewegt sich in Abhängigkeit vom Flüssigkeitsstand 11 entlang der Einstülpung 3. Dabei betätigt der Magnet 5 den jeweiligen auf seiner Höhe angeordneten Reed-Schalter 7. In einer Auswerteelektronik 12 wird dann der so ermittelte Füllstand 11 in ein entsprechendes elektrisches Signal umgewandelt und über Meßleitungen 13 einer nicht dargestellten Anzeige zugeführt.

Die Anordnung der Füllstandsanzeige in Figur 2 entspricht derjenigen in Figur 1 mit dem Unterschied, daß sich die Einstülpungen 3 beginnend vom Boden 4 in Richtung der den Behälter 1 nach oben begrenzenden Behälterwandungen 2 erstreckt. Ein am Ende der Einstülpung 3 ausgebildeter Ringwulst 14 verhindert, daß der Magnet 5 sich aus der Führung durch die Einstülpung 3 bewegt. Durch die vorteilhafte Anordnung von Nachfüllöffnung 10 zur Symmetrieachse der Einstülpung 3 gestaltet sich die Montage des Magneten 5 besonders einfach.

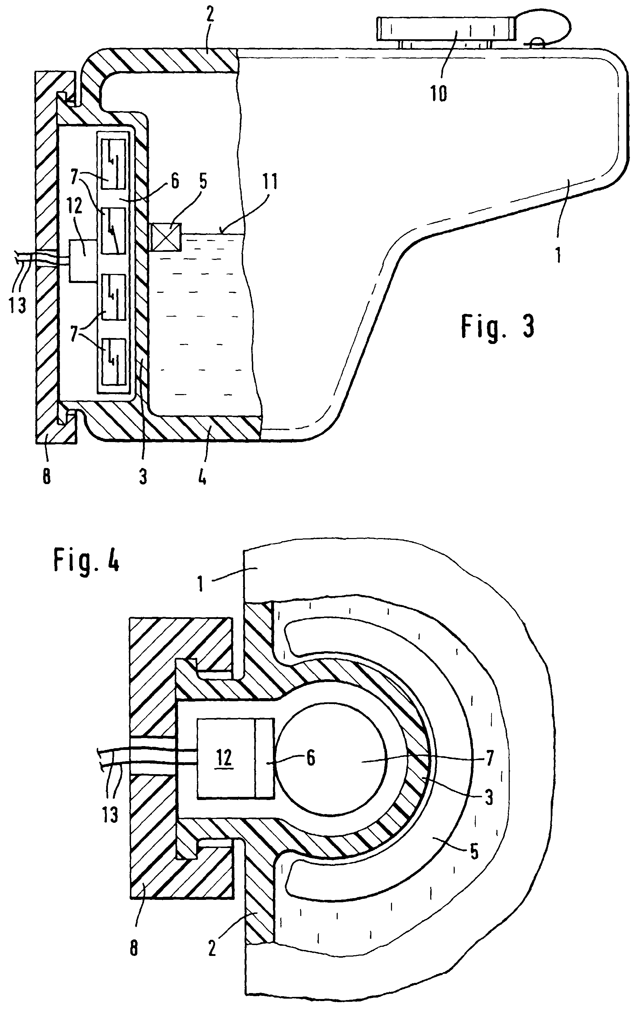

In Figur 3 ist im Gegensatz zu Figur 1 und 2 die Einstülpung 3 nicht mehr von der Behälterwandung 2 entfernend, sondern parallel zur Behälterwandung 2 verlaufend ausgebildet.

Die in Figur 4 gezeigte Draufsicht auf die Anordnung in Figur 3 zeigt die Einstülpung 3, die über ihre Längserstreckung mit der Behälterwandung 2 verbunden ist. In der Einstülpung 3 sind wiederum auf dem Träger 6 die Reedschalter 7 und die Auswerteelektronik 12 angeordnet. Der als Schwimmer ausgebildete Magnet 5 ist mit einem gewissen Spiel auf die Einstülpung 3 geklipst, so daß er in vertikaler Richtung frei beweglich ist, ohne zu verklemmen.

## Patentansprüche

1. Behälter mit Füllstandsanzeige, insbesonder für Waschflüssigkeit in einem Kraftfahrzeug, mit mehreren vertikal angeordneten, magnetisch betätigbaren Schaltern, die von einem als Schwimmer ausgebildeten Magnet schaltbar sind, **dadurch gekennzeichnet**, daß der Behälter (1) eine durch die Behälterwandung (2) gebildete vertikal verlaufende Einstülpung (3) besitzt, daß die magnetisch betätigbaren Schalter (7) in der Einstülpung (3) angeordnet sind und daß der als Schwimmer ausgebildete Magnet (5) die Einstülpung (3) derart umgibt, daß sie in vertikaler Richtung geführt ist.

2. Behälter nach Anspruch 1, **dadurch gekennzeichnet**, daß die Einstülpung (3) beginnend von einer den Behälter (1) nach oben begrenzenden Behälterwandung (2) in Richtung Boden (4) des Behälters (1) ausgebildet ist.

3. Behälter nach Anspruch 1, **dadurch gekennzeichnet**, daß die Einstülpung (3) beginnend vom Boden (4) des Behälter (1) in Richtung der den Behälter (1) nach oben begrenzenden Behälterwandung (2) ausgebildet ist.

4. Behälter nach Anspruch 1, **dadurch gekennzeichnet**, daß die Einstülpung (3) an einem vertikalen Bereich der Behälterwandung (2) derart angeordnet ist, daß die Einstülpung (3) in ihrer Längserstreckung vertikal und parallel zu der vertikalen Seite ausgebildet ist.

5. Behälter nach mindestens einem der Ansprüche 1 bis 4, **dadurch gekennzeichnet**, daß am Ende der Einstülpung (3) Mittel (16) angeordnet sind, durch die die Führung des Magneten (5) in vertikaler Richtung begrenzt ist.

6. Behälter nach mindestens einem der Ansprüche 1 bis 5, **dadurch gekennzeichnet**, daß die Einstülpung (3) mit einem Verschluß (8) verschlossen ist.

7. Behälter nach Anspruch 6, **dadurch gekennzeichnet**, daß der Verschluß (8) ein Deckel mit Rastelementen ist.

8. Behälter nach Anspruch 6, **dadurch gekennzeichnet**, daß der Verschluß (8) ein Schraubverschluß ist.

9. Behälter nach mindestens einem der Ansprüche 1 bis 8, **dadurch gekennzeichnet**, daß der Verschluß (8) mit einer Lasche (9) oder einem Filmscharnier mit dem Behälter (1) verbunden ist.

10. Behälter nach mindestens einem der Ansprüche 1 bis 9, **dadurch gekennzeichnet**, daß im Verschluß (8) ein Steckergehäuse angeordnet ist.
